# EUROPEAN PATENT APPLICATION

(11) **EP 2 482 570 A1**
(43) Date of publication of application: **01.08.2012**
(21) Application number: 10788636.8
(22) Date of filing: 23.03.2010
(51) Int. Cl.: H04W 8/00

(54) **BREW SERVICE DOWNLOAD SYSTEM AND IMPLEMENTING METHOD THEREOF**

(30) Priority: 27.09.2009 CN 200910179341
(71) Applicant: ZTE Corporation, Shenzhen, Guangdong 518057 (CN)
(72) Inventor: JIANG, Min, Shenzhen Guangdong 518057 (CN); BAO, Zhifan, Shenzhen Guangdong 518057 (CN); XUE, Dan, Shenzhen Guangdong 518057 (CN); CHEN, Haozhong, Shenzhen Guangdong 518057 (CN)
(74) Representative: Bongiovanni, Simone
(86) International application number: PCT/CN2010/071230
(87) International publication number: WO 2010/145240

(57) **Abstract**

A Binary Runtime Environment for Wireless (BREW) service download system and an implementation method thereof is provided in the present invention, wherein the implementation method comprises the following steps: a mobile terminal accesses a BREW service download website provided by a WWW/WAP server (S10); the WWW/WAP server generates a web page of the BREW service download website according to a User Agent Profile (UA Profile) of the mobile terminal (S20); and the mobile terminal downloads a BREW service in the web page (S30). According to the technical solution provided by the present invention, WWW/WAP websites can be used to display and introduce the downloadable contents to the users in a more detailed and more vivid graphic and text manner so as to attract the users to download and purchase, thereby improving the profits of the operators and service developers.

## Description

### Field of the Invention

The present invention relates to the communication field, and in particular to a Binary Runtime Environment for Wireless (abbreviated as BREW) service download system and an implementation method thereof.

### Background of the Invention

BREW is a basic platform introduced by QUALCOMM Incorporated and used for developing and running the value-added services on the "wireless internet transmission platform" of Code Division Multiple Access (abbreviated as CDMA) network. It provides a high-efficient, low-cost, extensible and familiar Application Execution Environment (abbreviated as AEE), and it focuses on developing applications which can be embedded therein with any practical handheld equipment seamlessly. Different from top products established on operating systems which have high requirements on memory space, processor speed and relevant hardware, BREW runs on currently available device types. The function environment provided by BREW is just like the operating systems on PC machines and can be used by downloading specific types of applications or games via the service providers.

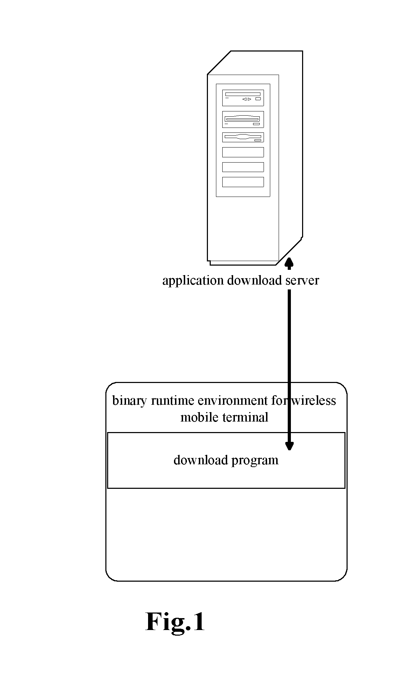

In the related art, the download method of BREW services (applications) is different from that of other ordinary Java, MP3, video and so on which are downloaded via browsers, and the download method of BREW services is to complete user authentication, charging and download via the direct interaction between the mShop download programs provided by the BREW platform of QUALCOMM and the Application Download Server (abbreviated as ADS), as shown in Fig. 1.

However, there are at least the following problems when the above download method is used: since what are mainly displayed by mShop are simple classification of downloadable contents and simple text introduction of single downloadable content, the users cannot obtain richer and more detailed information, thereby reducing the attraction of the downloadable contents and people's desire of downloading and purchasing, and reducing the profits of the operators.

### Summary of the Invention

In the present invention, a BREW service download system and an implementation method thereof are provided so as to solve the problem in the related art that the users cannot obtain richer and more detailed information, thereby reducing the attraction of the downloadable contents and people's desire of downloading and purchasing, and reducing the profits of the operators.

According to one aspect of the present invention, an implementation method for a BREW service download system is provided, comprising the following steps: accessing, by a mobile terminal, a BREW service download website provided by a WWW/WAP server; generating, by the WWW/WAP server, a web page of the BREW service download website according to a UA Profile of the mobile terminal; and downloading, by the mobile terminal, a BREW service in the web page.

In this case, the mobile terminal is provided thereon with a WWW/WAP browser and the mobile terminal accesses the BREW service download website via the WWW/WAP browser.

Preferably, in the above implementation method, before the mobile terminal accesses the BREW service download website, the method further comprises the step of: pre-adding fields which support BREW download in the UA Profile, wherein the fields includes a field indicating whether the mobile terminal supports to download the BREW service via a browser and a field indicating a particular manner which supports BREW service download.

Preferably, the mobile terminal is a BREW platform mobile terminal or a non-BREW platform mobile terminal, and when the terminal is a BREW platform mobile terminal, the fields which support BREW download further comprise: a version number of the BREW platform and a version number of an application manager.

Preferably, the step of downloading, by the mobile terminal, the BREW service in the web page comprises: providing, by the web page, downloadable BREW service and content information thereof for a user to view and accepting the user to select a BREW service to be downloaded by operating the mobile terminal; sending, by the WWW/WAP server, information of the mobile terminal and information of the BREW service to be downloaded to an application download server; carrying out identity authentication on the mobile terminal according to the information of the mobile terminal and the information of the BREW service to be downloaded and returning an authentication result to the WWW/WAP server by the application download server; and sending, by the WWW/WAP server, content of the BREW service to be downloaded to the mobile terminal when the authentication result is that the authentication is successful.

Preferably, the content information of the BREW service comprise content introduction of the BREW service, content provider, and purchase fee; the information of the mobile terminal comprises a number of the mobile terminal or a Mobile Equipment Identifier (MEID) number; and the information of the BREW service to be downloaded comprises a serial number of the BREW service to be downloaded.

Preferably, after the mobile terminal downloads the BREW service in the web page, the method further comprises: charging, by the application download server, according to download situation reported by the WWW/WAP server after the download is completed.

According to another aspect of the present invention, a BREW service download system is further provided, comprising: a WWW/WAP server, configured to provide a BREW service download website and generate a web page of the BREW service download website according to a user agent profile (UA Profile) of a mobile terminal when the mobile terminal accesses the BREW service download website; the mobile terminal, provided thereon with a WWW/WAP browser and configured to access the BREW service download website via the WWW/WAP browser and download a BREW service in the web page; and an application download server, configured to carry out identity authentication on the mobile terminal when the mobile terminal is downloading the BREW service in the web page.

Preferably, fields which support BREW download are pre-added in the UA Profile, wherein the fields comprise: a field indicating whether the mobile terminal supports to download the BREW service via a browser and a field indicating a particular manner which supports to download the BREW service.

Preferably, the mobile terminal is a BREW platform mobile terminal or a non-BREW platform mobile terminal, and when the terminal is a BREW platform mobile terminal, the fields which support BREW download further comprise: a version number of the BREW platform and a version number of an application manager.

Preferably, the mobile terminal is configured to download the BREW service in the web page comprises: the web page is configured to provide downloadable BREW service and content information thereof for a user to view and accept the user to select a BREW service to be downloaded by operating the mobile terminal; he WWW/WAP server is configured to send information of the mobile terminal and information of the BREW service to be downloaded to an application download server; the application download server is configured to carry out identity authentication on the mobile terminal according to the information of the mobile terminal and the information of the BREW service to be downloaded and return an authentication result to the WWW/WAP server; and the WWW/WAP server is configured to send content of the BREW service to be downloaded to the mobile terminal when the authentication result is that the authentication is successful.

Preferably, the content information of the BREW service comprise content introduction of the BREW service, content provider, and purchase fee; the information of the mobile terminal comprises a number of the mobile terminal or a Mobile Equipment Identifier (MEID) number; and the information of the BREW service to be downloaded comprises a serial number of the BREW service to be downloaded.

Preferably, the application download server is further configured to charge according to download situation reported by the WWW/WAP server after the download is completed.

Since the mobile terminal completes the download of the BREW service by interacting with a WWW/WAP server via the browser, the problem in the related art that the users cannot obtain richer and more detailed information thus reducing the attraction of the download contents and people's desire of downloading and purchasing and reducing the profits of the operators is solved, and therefore WWW/WAP websites can be used to display and introduce the downloadable contents to the users in a more detailed and more vivid graphic and text manner so as to attract the users to download and purchase, thereby improving the profits of the operators and service developers.

### Brief Description of the Drawings

The drawings illustrated here provide a further understanding of the present invention and form a part of the present application. The exemplary embodiments and the description thereof are used to explain the present invention without unduly limiting the scope of the present invention. In the drawings:
Fig. 1 shows a schematic diagram of downloading a BREW service via the interaction between mShop and an ADS by a BREW mobile terminal in the related art;
Fig. 2 shows a flow chart of an implementation method for a BREW service download system according to an embodiment of the present invention;
Fig. 3 shows a schematic diagram of a BREW service download system according to an embodiment of the present invention; and
Fig. 4 shows a flow chart of an implementation method for a BREW service download system according to a preferred embodiment of the present invention.

### Detailed Description of Embodiments

The present invention will be described hereinafter in detail with reference to the drawings and in conjunction with the embodiments.

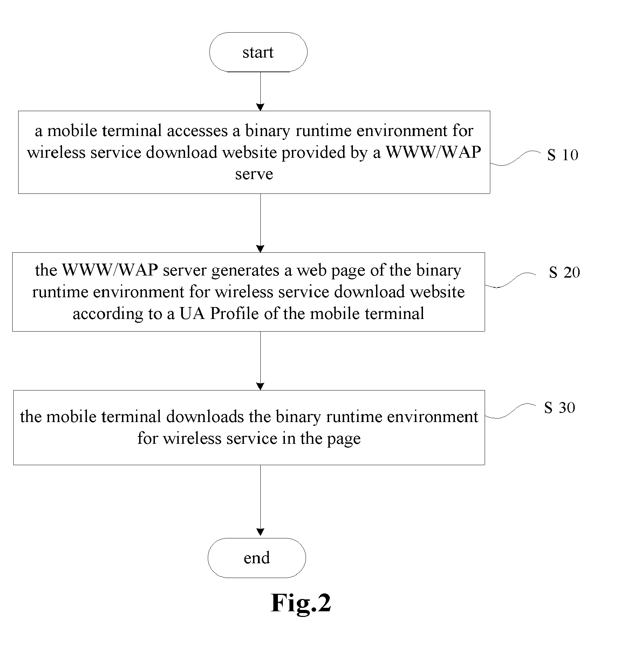

Fig. 2 shows a flow chart of an implementation method for a BREW service download system according to an embodiment of the present invention, wherein the method comprises the following steps.

Step S10: a mobile terminal accesses a BREW service download website provided by a WWW/WAP server.

Step S20: the WWW/WAP server generates a web page of the BREW service download website according to a User Agent Profile (abbreviated as UA Profile) of the mobile terminal.

Step S30: the mobile terminal downloads a BREW service in the web page.

In this case, the mobile terminal is provided thereon with a WWW/WAP browser and the mobile terminal accesses the BREW service download website via the WWW/WAP browser.

In this embodiment, the mobile terminal completes the download of the BREW service by interacting with the WWW/WAP server via the browser, and therefore the problem in the related art that the users cannot obtain richer and more detailed information thus reducing the attraction of the downloadable contents and people's desire of downloading and purchasing, and reducing the profits of the operators is solved. By using this embodiment, WWW/WAP websites can be used to display and introduce the downloadable contents to the users in a more detailed and more vivid graphic and text manner so as to attract the users to download and purchase, thereby improving the profits of the operators and service developers.

In addition, the users learn the contents to be downloaded very clearly via the introduction of the websites, thereby improving the satisfaction of the users. On the other hand, as long as a mobile terminal has a browser, the download of the BREW service can be achieved, so there will be more potential download users. Furthermore, it is convenient to compile using web pages.

Preferably, in the above implementation method, the method further comprises the steps of: pre-adding fields which support BREW download in the User_Agent Profile (abbreviated as UA Profile), wherein the fields includes a field indicating whether the mobile terminal supports the download of the BREW service via the browser and a field indicating a particular manner which supports BREW service download.

Preferably, the mobile terminal can be a BREW platform mobile terminal or a non-BREW platform mobile terminal, and when the terminal is a BREW platform mobile terminal, the fields which support BREW download further comprises: a version number of the BREW platform and a version number of an application manager. In this way, as compared to the related art that the mobile terminal must be based on the BREW platform if downloading via mShop, the range of mobile terminals which can support BREW service download is larger, which breaks the limitation of mobile terminals.

Preferably, the step S30 comprises the following steps: the web page provides a downloadable BREW service and content information thereof for a user to view and accepts the user to select a BREW service to be downloaded by operating the mobile terminal; the WWW/WAP server sends the information of the mobile terminal and the information of the BREW service to be downloaded to an application download server; the application download server carries out identity authentication on the mobile terminal according to the information of the mobile terminal and the information of the BREW service to be downloaded and returns an authentication result to the WWW/WAP server; and when the authentication result is that the authentication is successful, the WWW/WAP server sends the contents of the BREW service to be downloaded to the mobile terminal.

In this case, the content information of the BREW service comprises: content introduction of the BREW service, content provider, purchase fee; the information of the mobile terminal comprises the number of the mobile terminal or the MEID number; and the BREW service to be downloaded comprises the serial number of the BREW service to be downloaded.

A particular implementing scheme for downloading the BREW service in the web pages of a mobile terminal is provided by this preferred embodiment.

Preferably, after the step S30, the method further comprises the following step: after the download is completed, the application download server charges according to the download situation reported by the WWW/WAP server.

It can be known from the above preferred embodiments that the ADS carries out identity authentication on the mobile terminal which is to download the BREW service and charges according to the download situation.

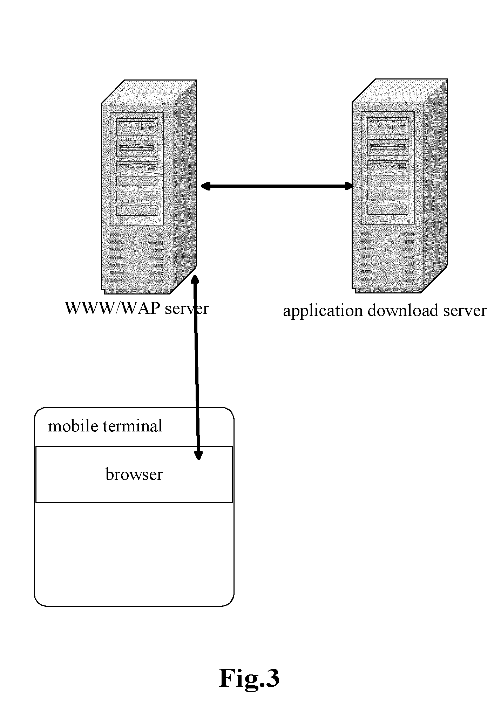

Fig. 3 shows a schematic diagram of a BREW service download system according to an embodiment of the present invention, wherein the system comprises: a WWW/WAP server, configured to provide a BREW service download website and generate a web page of the BREW service download website according to a UA Profile of a mobile terminal when the mobile terminal accesses the BREW service download website; the mobile terminal, provided thereon with a WWW/WAP browser and configured to access the BREW service download website via the WWW/WAP browser and download a BREW service in the web page; and an application download server, configured to carry out identity authentication on the mobile terminal when the mobile terminal is downloading the BREW service in the web page.

In this embodiment, the mobile terminal completes the download of the BREW service by interacting with the WWW/WAP server via the browser, the problem in the related art that the users cannot obtain richer and more detailed information thus reducing the attraction of the downloadable contents and people's desire of downloading and purchasing and reducing the profits of the operators is solved. By using this embodiment, WWW/WAP websites can be used to display and introduce the downloadable contents to the users in a more detailed and more vivid graphic and text manner so as to attract the users to download and purchase, thereby improving the profits of the operators and service developers.

Preferably, fields which support BREW download are pre-added in the UA Profile, wherein these fields comprise: a field indicating whether the mobile terminal supports to download the BREW service via the browser and a field indicating a particular manner which supports BREW service download. The mobile terminal can be a BREW platform mobile terminal or a non-BREW platform mobile terminal, and when the terminal is a BREW platform mobile terminal, the fields which support BREW download further comprise: a version number of the BREW platform and a version number of an application manager. In this way, as compared to the related art that the mobile terminal must be based on the BREW platform if downloading via mShop, the range of mobile terminals which can support BREW service download is larger, which breaks the limitation of mobile terminals.

Preferably, the mobile terminal downloading a BREW service in the web page comprises: the web page provides a downloadable BREW service and content information thereof for a user to view and accepts the user to select a BREW service to be downloaded by operating the mobile terminal; the WWW/WAP server sends the information of the mobile terminal and the information of the BREW service to be downloaded to an application download server; the application download server carries out identity authentication on the mobile terminal according to the information of the mobile terminal and the information of the BREW service to be downloaded and returns an authentication result to the WWW/WAP server; and when the authentication result is that the authentication is successful, the WWW/WAP server sends the contents of the BREW service to be downloaded to the mobile terminal.

In this case, the content information of the BREW service comprises: content introduction of the BREW service, content provider, purchase fee; the information of the mobile terminal comprises the number of the mobile terminal or the MEID number; and the BREW service to be downloaded comprises the serial number of the BREW service to be downloaded.

A particular implementing scheme for downloading the BREW service in the web pages of a mobile terminal is provided by this preferred embodiment.

Preferably, after the download is completed, the application download server charges according to the download situation reported by the WWW/WAP server.

It can be known from the above preferred embodiments that the ADS carries out identity authentication on the mobile terminal which is to download the BREW service and charges according to the download situation.

In the BREW service download system and the implementation method thereof provided by the above preferred embodiments, the WWW/WAP websites display the BREW download service, the mobile terminal downloads the BREW service on the websites by interacting with the WWW/WAP server via the browser, and the user authentication and charging are completed by the interaction between the WWW/WAP websites and the ADS.

The BREW service download procedure in the embodiments of the present invention is mainly completed by the combination of a mobile terminal, a UA Profile, and a WWW/Wap website.

### (1) Mobile terminal

This mobile terminal only needs to be configured with a WWW/Wap browser, and it does not need to be a BREW platform mobile terminal.

### (2) UA Profile

The fields which support BREW download are added in the UA Profile of the corresponding mobile terminal to indicate whether to support to download the BREW service via the browser, the download methods for supporting BREW service download, etc.

### (3) WWW/Wap website

As to each download content at the server side, information such as download content, development company, purchase price, etc. is introduced in a graphic and text manner by compiling web page data. When the mobile terminal accesses via the browser, the WWW/Wap website learns whether the mobile terminal of the user supports to download the BREW service via the browser, the download methods for supporting the BREW service, etc. according to the corresponding UA Profile of the mobile terminal. Then, relevant download contents are organized for the user to select and download.

When the user selects one item thereof to download, the WWW/Wap server delivers the user information (such as mobile terminal number, MEID number, and download contents) to an ADS server and completes user identity authentication via the ADS server. When the user download is completed, the WWW/Wap server reports the download situation of the user to the ADS server to achieve functions such as charging and so on.

Hereinafter, the BREW service download system and the implementation method of the embodiments of the present invention will be described in detail in conjunction with Fig. 3.

### 1. Mobile terminal

As shown in Fig. 3, the mobile terminal views the BREW service contents which can be downloaded by accessing the WWW/Wap website via the browser. This mobile terminal can be a BREW platform or a non-BREW platform, and as compared to that it must be a BREW mobile terminal if downloading via mShop, the range of mobile terminals which can support BREW service download is larger, and there will be more potential users.

### 2. UA Profile

A field which indicates whether this mobile terminal supports to download the BREW service via the browser and the particular methods which support BREW download are mainly added in the UA Profile.

Taking one certain operator as an example, when the BREW service is adapted to the WWW/Wap website, the URL of the downloadable contents is: the information format synchronized by the ItemUrl field is cmshop : Acquire = N&priceHandle = P, and when carrying out BREW service adaptation, judgment is carried out by the BREWWAPIntegration field in the UA Profile information:
① If BREWWAPIntegration = 0, then the BREW service would not be displayed to the user;
② If BREWWAPIntegration = 1, then the URL needs to be converted, cmshop : Acquire = N&priceHandle = P is converted to cmshop : ItemID = N, the conversion rule is to assign the value N of Acquire to ItemID;
③ If BREWWAPIntegration = 2, then cmshop : Acquire = N&priceHandle = P does not need to be converted by a portal, and in this case, the page is still displayed according to services, products, and contents in page levels; and
④ If there is no BREWWAPIntegration field in the information of one certain mobile terminal, then the BREW service is not displayed to the user.

If the terminal platform is a BREW platform, then it needs to add the version number of the BREW platform (BREWVersion) and the version number of an application manager (BREWAMVersion) in the UA Profile. If there is no BREWVersion field and BREWAMVersion field, then it indicates that this terminal is not a BREW platform machine and does not support BREW dynamic application download.

If it needs to add fields such as BREWWAPIntegration, BREWVersion, BREWAMVersion, etc. in the UA Profile, the particular compiling method can refer to the following contents:

```
     <!--********************** Software Platform Description
 **************************************-->
          <prf: component>
              <rdf: Description rdf.ID=" SoftwarePlatform">
                .......
     <prf: BREWVersion>
                       xx.xx.xx
                 </prf: BREWVersion>
     <prf: BREWAMVersion>
                       xx.xx
                       </prf: BREWAMVersion>
                 <prf: BREWWAPIntegration>
                       1
                 </prf: BREWWAPIntegration>
                 ......
              </rdf:Description>
          </prf:component>
```

Different mobile terminals define whether to support to download the BREW service via the browser in the UA Profile according to the support situation of the terminal platform, and define whether to only support music and video download and whether can support download of BREW dynamic application such as games, applications, etc. according to whether the terminal platform is a BREW platform.

### 3. WWW/Wap website

As to each download content at the server side, information such as download content, development company, purchase price, etc. is introduced in a graphic and text manner by compiling the page data. When the mobile terminal accesses via the browser, the WWW/Wap website learns whether the mobile terminal of the user supports to download the BREW service via the browser, the download methods for supporting the BREW service, etc. according to the corresponding UA Profile of the mobile terminal. Then, relevant download contents are organized for the user to select and download.

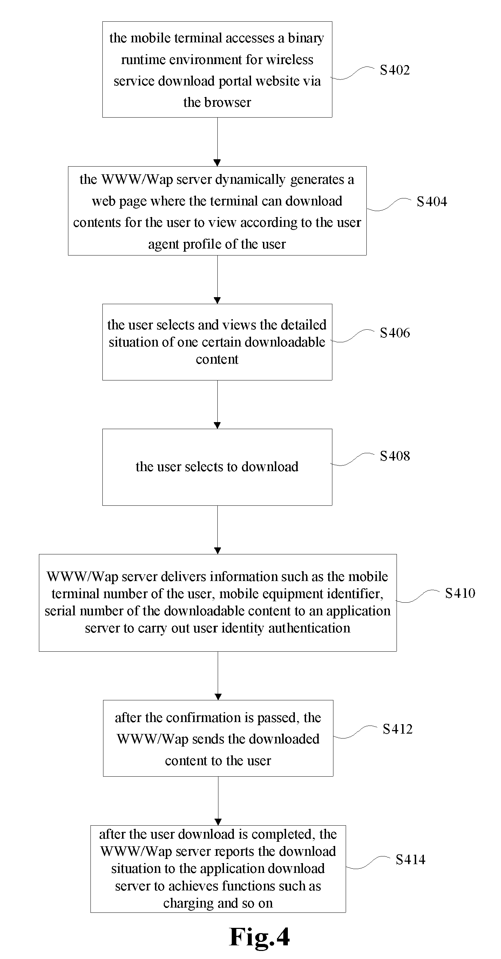

### 4. BREW service download procedure (as shown in Fig. 4)

Step S402: the mobile terminal accesses a BREW service download portal website via the browser.

Step S404: the WWW/Wap server learns whether the user supports BREW service download in a browser method and the method for supporting the BREW service download according to the UA Profile of the user. The server dynamically generate web pages where the terminal can download contents for the user to view according to the situations such as whether the terminal platform supports BREW dynamic application download and whether the terminal platform supports the download of audio, video, pictures and so on.

Step S406: the user select and view the detailed situation of one certain downloadable content (download content introduction, content provider, purchase fee, etc.).

Step S408: the user selects to download.

Step S410: the WWW/Wap server delivers information such as the mobile terminal number, MEID number, serial number of the downloadable content, etc. to an ADS to carry out user identity authentication.

Step S412: after the confirmation is passed, the WWW/Wap server sends the downloaded content to the user.

Step S414: when the user download is completed, the WWW/Wap reports the download situation to the ADS server to achieve functions such as charging and so on.

It can be seen from the above description that the present invention achieves the following technical effects:
(1) WWW/WAP websites can be used to display and introduce the downloadable contents to the users in a more detailed and more vivid graphic and text manner so as to attract the users to download and purchase, thereby improving the profits of the operators and service developers; and
(2) As long as a mobile terminal has a browser, the download of the BREW service can be achieved, so there will be more potential download users.

Apparently, those skilled in the art shall understand that the above-mentioned modules and steps of the present invention can be realized by using general purpose calculating device, can be integrated in one calculating device or distributed on a network which consists of a plurality of calculating devices, and alternatively they can be realized by using the executable program code of the calculating device, so that consequently they can be stored in the storing device and executed by the calculating device, or they are made into integrated circuit module respectively, or a plurality of modules or steps thereof are made into one integrated circuit module. In this way, the present invention is not restricted to any particular hardware and software combination.

Above description is only to illustrate the preferred embodiments but not to limit the present invention. Various alterations and changes to the present invention are apparent to those skilled in the art. The protective scope defined in the present invention shall comprise any modification, equivalent substitution and improvement within the spirit and principle of the present invention.

## Claims

1. An implementation method for a Binary Runtime Environment for Wireless (BREW) service download system, **characterized by** comprising the steps of:
accessing, by a mobile terminal, a BREW service download website provided by a WWW/WAP server;
generating, by the WWW/WAP server, a web page of the BREW service download website according to a User Agent Profile (UA Profile) of the mobile terminal; and
downloading, by the mobile terminal, a BREW service in the web page.

2. The implementation method according to Claim 1, **characterized in that** the mobile terminal is provided thereon with a WWW/WAP browser and the mobile terminal accesses the BREW service download website via the WWW/WAP browser.

3. The implementation method according to Claim 1, **characterized in that**, before the mobile terminal accesses the BREW service download website, the method further comprises the step of:
pre-adding fields which support BREW download in the UA Profile, wherein the fields includes a field indicating whether the mobile terminal supports to download the BREW service via a browser and a field indicating a particular manner which supports BREW service download.

4. The implementation method according to Claim 3, **characterized in that** the mobile terminal is a BREW platform mobile terminal or a non-BREW platform mobile terminal, and when the terminal is a BREW platform mobile terminal, the fields which support BREW download further comprise: a version number of the BREW platform and a version number of an application manager.

5. The implementation method according to Claim 1, **characterized in that** the step of downloading, by the mobile terminal, the BREW service in the web page comprises:
providing, by the web page, downloadable BREW service and content information thereof for a user to view and accepting the user to select a BREW service to be downloaded by operating the mobile terminal;
sending, by the WWW/WAP server, information of the mobile terminal and information of the BREW service to be downloaded to an application download server;
carrying out identity authentication on the mobile terminal according to the information of the mobile terminal and the information of the BREW service to be downloaded and returning an authentication result to the WWW/WAP server by the application download server; and
sending, by the WWW/WAP server, content of the BREW service to be downloaded to the mobile terminal when the authentication result is that the authentication is successful.

6. The implementation method according to Claim 5, **characterized in that** the content information of the BREW service comprise content introduction of the BREW service, content provider, and purchase fee; the information of the mobile terminal comprises a number of the mobile terminal or a Mobile Equipment Identifier (MEID) number; and the information of the BREW service to be downloaded comprises a serial number of the BREW service to be downloaded.

7. The implementation method according to Claim 5, **characterized in that**, after the mobile terminal downloads the BREW service in the web page, the method further comprises:
charging, by the application download server, according to download situation reported by the WWW/WAP server after the download is completed.

8. A Binary Runtime Environment for Wireless (BREW) service download system, **characterized by** comprising:
a WWW/WAP server, configured to provide a BREW service download website and generate a web page of the BREW service download website according to a user agent profile (UA Profile) of a mobile terminal when the mobile terminal accesses the BREW service download website;
the mobile terminal, provided thereon with a WWW/WAP browser and configured to access the BREW service download website via the WWW/WAP browser and download a BREW service in the web page; and
an application download server, configured to carry out identity authentication on the mobile terminal when the mobile terminal is downloading the BREW service in the web page.

9. The BREW service download system according to Claim 8, **characterized in that** fields which support BREW download are pre-added in the UA Profile, wherein the fields comprise: a field indicating whether the mobile terminal supports to download the BREW service via a browser and a field indicating a particular manner which supports to download the BREW service.

10. The BREW service download system according to Claim 9, **characterized in that** the mobile terminal is a BREW platform mobile terminal or a non-BREW platform mobile terminal, and when the terminal is a BREW platform mobile terminal, the fields which support BREW download further comprise: a version number of the BREW platform and a version number of an application manager.

11. The BREW service download system according to Claim 8, **characterized in that** the mobile terminal is configured to download the BREW service in the web page comprises:
the web page is configured to provide downloadable BREW service and content information thereof for a user to view and accept the user to select a BREW service to be downloaded by operating the mobile terminal;
the WWW/WAP server is configured to send information of the mobile terminal and information of the BREW service to be downloaded to an application download server;
the application download server is configured to carry out identity authentication on the mobile terminal according to the information of the mobile terminal and the information of the BREW service to be downloaded and return an authentication result to the WWW/WAP server; and
the WWW/WAP server is configured to send content of the BREW service to be downloaded to the mobile terminal when the authentication result is that the authentication is successful.

12. The BREW service download system according to Claim 11, **characterized in that** the content information of the BREW service comprise content introduction of the BREW service, content provider, and purchase fee; the information of the mobile terminal comprises a number of the mobile terminal or a Mobile Equipment Identifier (MEID) number; and the information of the BREW service to be downloaded comprises a serial number of the BREW service to be downloaded.

13. The BREW service download system according to Claim 11, **characterized in that** the application download server is further configured to charge according to download situation reported by the WWW/WAP server after the download is completed.
